# EUROPÄISCHE PATENTSCHRIFT

(11) **EP 1 233 882 B1**
(45) Veröffentlichungstag und Bekanntmachung des Hinweises auf die Patenterteilung: **09.07.2003**
(21) Anmeldenummer: 00993249.2
(22) Anmeldetag: 01.12.2000
(51) Int. Cl.: B60Q 1/14

(54) **LENKSTOCKSCHALTER**
STEERING COLUMN SWITCH
ENSEMBLE COMMUTATEUR MONTE SUR LA COLONNE DE DIRECTION

(30) Priorität: 04.12.1999 DE 19958505
(43) Veröffentlichungstag der Anmeldung: 28.08.2002
(73) Patentinhaber: Delphi Technologies Inc., Troy, MI 48007 (US)
(72) Erfinder: RUDOLPH, Gerd, 55459 Aspisheim (DE); BESIER, Holger, 65375 Oestrich-Winkel (DE)
(74) Vertreter: Becker, Bernd, Dipl.-Ing.
(86) Internationale Anmeldenummer: DE0004306
(87) Internationale Veröffentlichungsnummer: WO01040019

(56) Entgegenhaltungen:
- DE-A- 4 305 827
- DE-A- 19 801 526
- DE-C- 3 433 451
- US-A- 5 977 495

## Beschreibung

Die Erfindung bezieht sich auf einen Lenkstockschalter eines Kraftfahrzeuges mit einem getasteten Blinkerschalter und einem getasteten Wischer-/Wascherschalter in einem gemeinsamen Gehäuse, wobei jeder Schalter einen kreuzgelenkig gelagerten, ein Dreh- sowie Schiebeschaltglied beaufschlagenden Schalthebel, einen Träger mit Anschlußkontakten und Rasteinrichtungen umfaßt. Derartige Lenkstockschalter gehören zum Stand der Technik.

Aus der DE-C-27 21 879 ist ein Lenkstockschalter mit einem getasteten Blinkerschalter bekannt, dessen Schalthebel für das Fahrbahnwechselblinken oder für die Fahrtrichtungsanzeige nach rechts und nach links jeweils nacheinander einen oder zwei zugeordnete Tastschalter beaufschlagt. Der Einschaltzustand des Blinkerschalters wird mittels einer elektronischen Halteeinrichtung gespeichert und durch eine elektronische Rücksetzeinrichtung wird die Halteeinrichtung zurückgesetzt. Der Schalthebel wird nach seiner Betätigung durch eine federbeaufschlagte Schaltbrücke selbsttätig in eine Neutralstellung zurückgestellt. Dieser Schalter dient aufgrund seiner begrenzten Funktionen sowie seiner eingeschränkten Bewegungsfähigkeit lediglich als Blinkerschalter.

Ferner sind Wischer-/Wascherschalter für Kraftfahrzeuge bekannt, deren Schalthebel für die Front-Wischerfunktionen im und gegen den Uhrzeigersinn verschwenkbar in einem Gehäuse gelagert sind und für die Front/Wäscher- und Heck Wischer-/Wascherfunktionen sind die Schalthebel in und gegen die Richtung eines Armaturenbrettes verschwenkbar gelagert. Die Schalterfunktionen können sowohl mechanisch verrastend als auch getastet ausgeführt werden.

Jeder der zuvor erläuterten Schalter weist spezifische Merkmale hinsichtlich seiner Mechanik auf, die dessen separate Fertigung erforderlich machen. Die Existenz dieser unterschiedlichen Schalter bringt neben einem hohen Fertigungsaufwand auch einen hohen logistischen Aufwand durch eine separate Lagerhaltung und ein separates Handling während der Montage mit sich. Ferner ist es erforderlich, entsprechend unterschiedliche Schalter für rechts- und linksseitig gelenkte Kraftfahrzeuge zu produzieren.

Darüber hinaus offenbart die US-A-5 977 495 einen Lenkstockschalter für ein Kraftfahrzeug mit zwei in ein Gehäuse eingesetzten Schaltern mit separaten Schaltergehäusen, wobei die beiden Schalter die gleiche Konstruktion aufweisen. In jedem Schaltergehäuse ist ein Schalthebel kreuzgelenkig gelagert. Der Schalthebel weist Schaltkontakte zur Beaufschlagung von schaltergehäuseseitigen Festkontakten auf und ist zumindest in seinen oberen und unteren Schaltstellungen verrastbar.

Es ist Aufgabe der Erfindung, einen Lenkstockschalter der eingangs genannten Art zu schaffen, dessen Blinker- sowie Wischer-/Wascherschalter gegenseitig austauschbar sind, wobei der Lenkstockschalter durch eine beschränkte Teileanzahl kostengünstig zu fertigen ist.

Erfindungsgemäß wird die Aufgabe dadurch gelöst, daß der Schalthebel, das Dreh- sowie Schiebeschaltglied, der Träger und die Rasteinrichtungen jedes Schalters identisch ausgebildet sind und der Träger im wesentlichen Z-förmig ist, wobei der dem Schalthebel zugewandtc Schenkel zur Führung des Schiebeschaltgliedes dient, der andere Schenkel in das Gehäuse eingesetzt ist und der die Schenkel verbindende Steg das Drehschaltglied lagert.

Aufgrund dieser Maßnahmen wird eine identische Schaltermechanik für die beiden Schalter bereitgestellt, die in entsprechend großer Stückzahl kostengünstig zu produzieren ist. Auch bei der Lagerung und Montage der Schalter müssen diese nicht nach ihren Funktionen separiert werden. Im weiteren ist gewährleistet, daß keine unterschiedlichen Schalter für links- oder rechtsseitig gelenkte Kraftfahrzeuge gefertigt und montiert werden müssen. Die Schalterfunktionen werden den Schaltern mit der identischen Schaltermechanik in einer sogenannten Endmontageprogrammierung der Bordelektronik zugewiesen. Im Weiteren stellt der Träger ein wesentliches Bauteil zur Aufnahme des Schiebeschaltgliedes und des Drehschaltgliedes dar. Der Träger bildet mit den zugeordneten Schaltgliedern eine von dem Lenkstockschalter unabhängige Baugruppe, die separat zu montieren und bei Bedarf relativ einfach auszutauschen ist.

Um eine Ausgangsposition des kreuzgelenkig gelagerten Schalthebels sicherzustellen und ein erwünschtes Schaltgefühl bei dessen Betätigung zu gewährleisten, haltert bevorzugt der das Schiebeschaltglied führende Schenkel des Trägers mittig zwei übereinanderliegende, federbelastete Rasthülsen der Rasteinrichtungen, wobei die obere Rasthülse mit einer Rastkurve im Fuß des Schalthebels und die untere Rasthülse mit einer Rastkurve des Drehschaltgliedes zusammenwirkt. Zweckmäßigerweise ist jede Rastkurve V-förmig ausgebildet.

Zur kreuzgelenkigen Lagerung des Schalthebels sowie zur Ausführung zugeordneter Schaltfunktionen ist das Drehschaltglied L-förmig ausgeführt, wobei in den kurzen Schenkel der Schalthebel schwenkbeweglich eingesetzt und der lange Schenkel in dem Träger gelagert ist. Somit entfällt die Anordnung zusätzlicher Lagerungen für den Schalthebel, da in das Drehschaltglied entsprechende Lagerstellen integriert sind.

Nach einer vorteilhaften Weiterbildung des Erfindungsgedankens weist der lange Schenkel des Drehschaltgliedes als Kontaktfedern ausgebildete Schaltkontakte zur Kontaktierung von zugeordneten Kontaktbahnen des Steges des Trägers auf. Bevorzugt ist der lange Schenkel des Drehschaltgliedes mit einer Aussparung versehen, in die die Kontaktfedern hineinragen. Die Kontaktfedern sind Bestandteil eines in das Drehschaltglied eingelassenen Stanzgitters. Die Fertigung des Drehschaltgliedes erfolgt im Spritzgußverfahren, bei dem das Stanzgitter gleichzeitig umspritzt wird, so daß ein zusätzlicher Montageschritt entfällt.

Zweckmäßigerweise sind die Kontaktfedern an einer Seite der Aussparung befestigt und an ihren freien Enden jeweils mit einer V-förmigen Abwinklung versehen, deren Spitze die zugeordnete Kontaktbahn beaufschlagt. Diese Ausgestaltung stellt eine linienförmige Kontaktierung der entsprechenden Kontaktbahn sicher, wobei die Spitze der Kontaktfeder unter Vorspannung auf der Kontaktbahn aufliegt.

Nach einer vorteilhaften alternativen Weiterbildung des Erfindungsgedankens ist dem langen Schenkel des Drehschaltgliedes eine Betätigungseinrichtung für als Mikroschalter ausgebildete Schaltkontakte zugeordnet, die an dem Steg des Trägers angeordnet sind. Der Mikroschalter bietet den Vorteil eines exakten Schaltpunktes, der über die Betätigungseinrichtung erreicht wird. Zur Ausführung unterschiedlicher Schaltvorgänge ist entweder eine entsprechende Programmierung der Bordelektronik oder die Anordnung einer entsprechenden Anzahl von Mikroschaltern notwendig.

Bevorzugt umfaßt die Betätigungseinrichtung zwei Federarme zur Beaufschlagung jeweils eines Mikroschalters, wobei das freie Ende jedes Federarmes einen Nocken trägt, der mit Schaltnocken des Drehschaltgliedes zusammenwirkt. Die Betätigungseinrichtung stellt im Zusammenspiel mit den Schaltnocken des Drehschaltgliedes eine wegabhängige Beaufschlagung der Mikroschalter sicher. Hierbei wird das Signal des zuerst betätigten Mikroschalters von der Bordelektronik gespeichert und nach dem darauffolgenden Setzen eines zweiten Signals ist ein Schaltvorgang durch die Bordelektronik eindeutig identifizierbar. Nach der Speicherung des zweiten Signals können durch erneutes Beaufschlagen eines der Mikroschalter weitere Signale von der Bordelektronik gespeichert und entsprechende Schaltvorgänge ausgelöst werden.

Vorteilhafterweise trägt der kurze Schenkel des Drehschaltgliedes auf der Stirnseite und der gegenüberliegenden Seite jeweils einen Lagerzapfen, wobei der stirnseitige Lagerzapfen in eine entsprechende Lagerbohrung des Gehäuses und der gegenüberliegende Lagerzapfen in eine entsprechende Lagerbohrung des Trägers eingreift. Mittels dieser Zweipunktlagerung des Drehschaltgliedes ist eine zuverlässige Funktionsweise des Drehschaltgliedes erzielt.

Nach einer weiteren vorteilhaften Ausgestaltung der Erfindung weist das Schiebeschaltglied eine Ausnehmung für einen Betätigungsansatz des Schalthebels auf. Zweckmäßigerweise ist die Ausnehmung langlochförmig ausgebildet und einem horizontalen Steg des Schiebeschaltgliedes zugeordnet. Die Anordnung des Betätigungsansatzes in der Ausnehmung stellt die mechanische Verbindung zwischen dem Schalthebel und dem Schiebeschaltglied dar. Da der Schalthebel kardianisch gelagert ist, jedoch nur in einer Schwenkrichtung die Position des Schiebeschaltgliedes verändern soll, ist die Aufnahme langlochförmig ausgebildet. Während der Schwenkbewegung des Schalthebels zur Betätigung des Drehschaltgliedes folgt der Betätigungsansatz der Längsorientierung des Langloches und es erfolgt keine Beaufschlagung des Schiebeschaltgliedes. Wird der Schalthebel in einer beliebigen Stellung senkrecht zu der ersten Schwenkbewegung verschwenkt, verschiebt der Betätigungsansatz das Schiebeschaltglied aus seiner Ruheposition.

Zur Ausführung zugeordneter Schaltfunktionen ist zweckmäßigerweise das Schiebeschaltglied mit senkrecht zu der Ausnehmung angeordneten, als Kontaktarme ausgebildeten Schaltkontakten versehen, die mit zugeordneten Kontaktbahnen des entsprechenden Schenkels des Trägers zusammenwirken. Die Kontaktarme sind wiederum Bestandteile eines in das Schiebeschaltglied eingespritzten Stanzgitters.

Bevorzugt sind der Blinkerschalter und der Wischer-/ Wascherschalter einer gemeinsamen Leiterplatte zugeordnet, die mit einem Bordnetz des Kraftfahrzeuges in Verbindung steht.

Zweckmäßigerweise die Leiterplatte mit Bohrungen für die Anschlußkontakte des Blinkerschalters und des Wischer-/ Wascherschalters versehen ist. Somit ist die Anzahl der Zuleitungen des Bordnetzes bzw. der Bordelektronik zu den Schaltern reduziert und die mit der Leiterplatte in Verbindung stehende Bordelektronik, die weitere der Leiterplatte zugeordnete Schaltfunktionen verwaltet, hat Zugriff auf die Funktionen beider Schalter. Im weiteren ist die durch das Einsetzen der Anschlußkontakte in die korrespondierenden Bohrungen der Leiterplatte eine Fixierung geschaffen, die die elektrische Verbindung erleichtert.

Es versteht sich, daß die vorstehend genannten und nachstehend noch zu erläuternden Merkmale nicht nur in der jeweils angegebenen Kombination, sondern auch in anderen Kombinationen verwendbar sind, ohne den Rahmen der vorliegenden Erfindung zu verlassen.

Die Erfindung wird im folgenden anhand eines Ausführungsbeispieles unter Bezugnahme auf die zugehörigen Zeichnungen näher erläutert. Es zeigen:

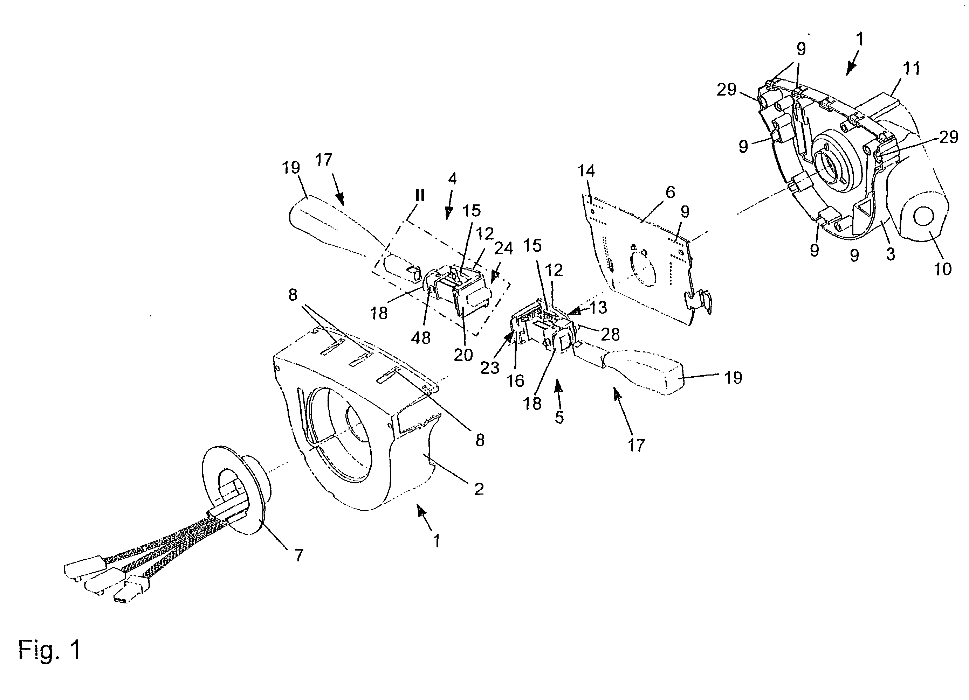

- Fig.1: eine Explosionsdarstellung eines erfindungsgemäßen Lenkstockschalters,

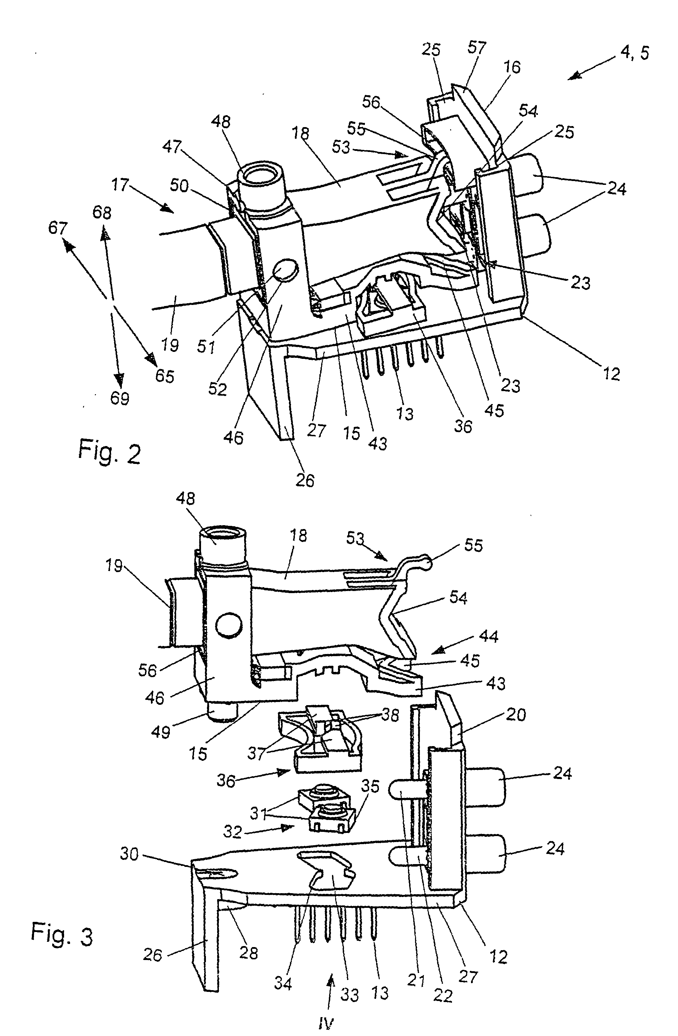

- Fig.2: eine vergrößerte Darstellung einer Einzelheit II nach Fig. 1,
- Fig.3: eine Explosionsdarstellung nach Fig. 2,

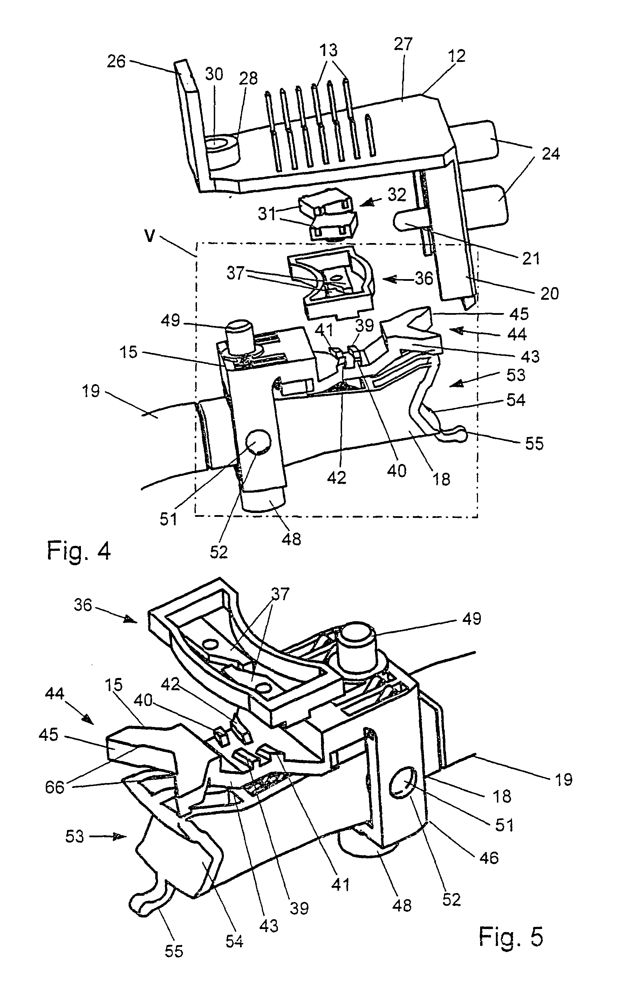

- Fig.4: eine Darstellung der Ansicht in Richtung des Pfeiles IV nach Fig. 3,
- Fig.5: eine vergrößerte Darstellung einer Einzelheit V nach Fig. 4 und

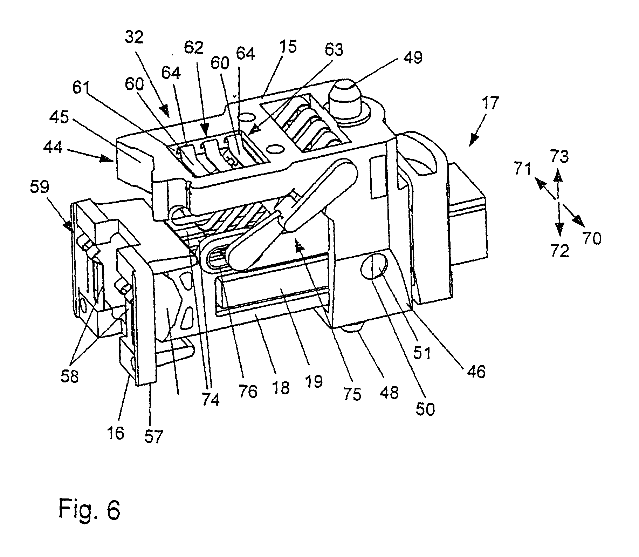

- Fig.6: eine vergrößerte Darstellung einer Einzelheit V nach Fig. 4 in einer alternativen Ausgestaltung.

Der Lenkstockschalter umfaßt ein zweiteiliges Gehäuse 1, das aus einem Deckel 2 und einem Trägermodul 3 besteht und einen Blinkerschalter 4 sowie einen Wischer-/Wascherschalter 5 mit einer zugeordneten Leiterplatte 6 aufnimmt. Auf der einem nicht dargestellten Lenkrad zugewandten Seite ist ein Übertragungselement 7 zur Ansteuerung der Funktionen eines Airbags in den Deckel 2 des Gehäuses 1 eingesetzt, das mit der Leiterplatte 6 in Verbindung steht. Auf seinem Umfang ist der Deckel 2 mit Klipsöffnungen 8 versehen, die mit korrespondierenden Klipsarmen 9 des Trägermoduls 3 Klipsverbindungen eingehen. Im weiteren umfaßt das Trägermodul 3 eine Aufnahme 10 für ein Zündschloß sowie eine Befestigungseinrichtung 11 zur Festlegung des Lenkstockschalters an einem Mantelrohr einer Lenksäule des Kraftfahrzeuges.

Der Blinkerschalter 4 und der Wischer-/Wascherschalter 5 sind identisch aufgebaut und bestehen jeweils im wesentlichen aus einem Träger 12 mit Anschlußkontakten 13, die in korrespondierende Bohrungen 14 der Leiterplatte 6 eingreifen, einem Dreh- 15 sowie Schiebeschaltglied 16 und einem kreuzgelenkig gelagerten Schalthebel 17. Der Schalthebel 17 ist zweiteilig ausgeführt und besteht aus einem Fuß 18 und einem Griffstück 19, wobei der Fuß 18 und das Griffstück 19 mechanisch miteinander verbunden sind.

Der Träger 12 ist im wesentlichen Z-förmig ausgebildet und haltert in dem dem Schalthebel 17 zugewandten Schenkel 20 mittig zwei übereinanderliegende, federbelastete Rasthülsen 21, 22, die Bestandteile von Rasteinrichtungen 23 des Schalters 4 bzw. 5 sind. Hierzu sind an den Schenkel 20 des Trägers 12 Dome 24 angeformt, in die entsprechende Druckfedern eingesetzt sind, die auf die Rasthülsen 21, 22 wirken. Im weiteren weist der Schenkel 20 gegenüberliegende Nuten 25 zur Führung des Schiebeschaltgliedes 16 sowie nicht dargestellte Kontaktbahnen auf.

Der zweite Schenkel 26 des Trägers 12 wird in dem Trägermodul 3 des Gehäuses 1 fixiert. Der Schenkel 20, 26 verbindende Steg 27 umfaßt im Bereich des Schenkels 26 einen angeformten Zentrieransatz 28, der in eine entsprechende Ausnehmung 29 des Trägermoduls 3 eingreift sowie eine in den Zentrieransatz 28 eingelassene Lagerbohrung 30 zur Lagerung des Drehschaltgliedes 15. Ferner sind dem Steg 27 die Anschlußkontakte 13 sowie als Mikroschalter 31 ausgebildete Schaltkontakte 32 zugeordnet. Um die Mikroschalter 31 in einer definierten Lage zu fixieren, ist in dem Steg 27 ein Durchbruch 33 ausgeformt, dessen Innenkontur 34 der Außenkontur 35 der nebeneinandergeordneten Mikroschalter 31 entspricht.

Zwischen den Mikroschaltern 31 und dem im wesentlichen L-förmigen Drehschaltglied 15, das sich parallel zu dem Steg 27 des Trägers 12 erstreckt, ist eine Betätigungseinrichtung 36 mit zwei Federarmen 37 zur Betätigung jeweils eines Mikroschalters 31 angeordnet. Das freie Ende jedes Federarmes 37 ist mit einem Nocken 38 versehen, der mit Schaltnocken 39, 40, 41, 42 des Drehschaltgliedes 15 zusammenwirkt, wobei die Schaltnocken 39, 40, 41, 42 einem langen Schenkel 43 des Drehschaltgliedes 15 zugeordnet sind. An seiner dem Schenkel 20 des Trägers 12 zugewandten Stirnseite 44 weist der Schenkel 43 des Drehschaltgliedes 15 eine V-förmige Rastkurve 45 auf, die Bestandteil einer der Rasteinrichtungen 23 ist und die mit der unteren Rasthülse 22 zusammenwirkt.

In einer alternativen Ausgestaltung des Drehschaltgliedes 15 des Schalters 4 bzw. 5 sind die Schaltkontakte 32 dem langen Schenkel 43 des Drehschaltgliedes 15 zugeordnet. Die Schaltkontakte 32 sind als Kontaktfedern 60 ausgebildet und wirken mit nicht dargestellten Kontaktbahnen im Steg 27 des Trägers 12 zusammen. Die Kontaktfedern 60 ragen in eine Aussparung 61 des Schenkels 43 und sind an ihren freien Enden 62 jeweils mit einer V-förmigen Abwinklung 63 versehen, deren Spitze 64 die zugeordnete Kontaktbahn beaufschlagt.

Der kurze Schenkel 46 des Drehschaltgliedes 15 umfaßt jeweils einen auf der Stirnseite 47 und der gegenüberliegenden Seite angeformten Lagerzapfen 48, 49, wobei der stirnseitige Lagerzapfen 48 in eine korrespondierende Lagerbohrung des Deckels 2 des Gehäuses 1 und der gegenüberliegende Lagerzapfen 49 in die Lagerbohrung 30 des Trägers 12 eingreift. Im weiteren ist in den kurzen Schenkel 46 ein Durchbruch 50 eingelassen, in den der Fuß 18 des Schalthebels 16 schwenkbeweglich eingesetzt ist. Dazu weist der Fuß 18 seitliche Achszapfen 51 auf, die in korrespondierenden Bohrungen 52 des Schenkels 46 gelagert sind.

Des weiteren umfaßt der Fuß 18 des Schalthebels 16 an seinem freien, dem Schenkel 20 des Trägers 12 zugewandten Ende 53 eine V-förmige Rastkurve 54, die mit der oberen Rasthülse 21 zusammenwirkt sowie einen Betätigungsansatz 55, der das Schiebeschaltglied 16 beaufschlagt. Der Betätigungsansatz 55 greift in eine langlochförmige Ausnehmung 56 eines horizontalen Steges 57 des Schiebeschaltgliedes 16 ein. Die langlochförmige Ausbildung der Ausnehmung 56 ermöglicht ein Verschwenken des Schalthebels 17 um die Lagerzapfen 48, 49, ohne daß das Schiebeschaltglied 16 bewegt wird und stellt gleichzeitig die Verschiebung des Schiebeschaltgliedes 16 in den Nuten 25 des Schenkels 20 des Trägers 12 bei einer Schwenkbewegung des Schalthebels 17 um die Achszapfen 51 sicher. Durch das Zusammenwirken der Rasthülse 21 mit der Rastkurve 54 des Schalthebels 17 wird dieser in einer Mittenlage gehalten, wodurch das Schiebeschaltglied 16 eine äquivalente Position einnimmt. Dem Schiebeschaltglied 16 sind als Kontaktarme 58 ausgebildete Schaltkontakte 59 zugeordnet, die senkrecht zu der Ausnehmung 56 verlaufen und mit den Kontaktbahnen im Schenkel 20 des Trägers 12 zusammenwirken.

Nachfolgend wird die Funktionsweise des getasteten Blinkerschalters 4 erläutert, wobei als Schaltkontakte 32 die Mikroschalter 31 vorgesehen sind. Während der Schwenkbewegung des Schalthebels 17 aus der Neutralstellung in Richtung des Pfeiles 65 erreicht der Schaltnocken 42 den zugeordneten Nocken 38 und bewegt den Federarm 37 der Betätigungseinrichtung 36 in die Richtung des entsprechenden Mikroschalters 31, nach dessen Betätigung eine Bordelektronik ein Signal erhält. Dieses Signal, das die Richtung des Blinkens vorgibt, wird gespeichert und löst gleichzeitig ein Fahrbahnwechselblinken der linken Blinkleuchten aus. Nach dem Loslassen des Schalthebels schwenkt dieser von der zugehörigen Rasteinrichtung 23 gesteuert in seine Neutralstellung zurück.

Wird der Schalthebel 17 über eine Schwelle 66 der Rastkurve 45 in Richtung des Pfeiles 65 verschwenkt, setzt der über den Schaltnocken 42 zuerst betätigte Mikroschalter 31 in der Bordelektronik ein Signal für die Richtung des Blinkens. Der anschließend von dem Schaltnocken 40 beaufschlagte Mikroschalter 31 bewirkt ein von der Bordelektronik gesteuertes Dauerblinken der linken Blinkleuchten nach dem Loslassen des Schalthebels 17. Das Dauerblinken wird durch eine elektronische Winkelmeßeinrichtung oder durch ein Verschwenken des Schalthebels 17 in Richtung des Pfeiles 67 beendet. Das Blinken nach rechts wird durch das Verschwenken des Schalthebels 17 in Richtung des Pfeiles 67 ausgelöst, wobei zuerst der Schaltkontakt 39 den zugeordneten Mikroschalter 31 für eine in der Bordelektronik speicherbare Richtungsangabe bzw. das Fahrbahnwechselblinken beaufschlagt. Nach dem Überschreiten der Schwelle 65 der Rastkurve 45 setzt das Dauerblinken der rechten Blinkleuchten ein, das entweder durch eine elektronische Winkelmeßeinrichtung oder durch ein Verschwenken des Schalthebels 17 in Richtung des Pfeiles 65 beendet wird.

Wird der Schalthebel 17 um die Achszapfen 51 in Richtung des Pfeiles 68 verschwenkt, erfolgt durch den in die Ausnehmung 56 des Schiebeschaltgliedes 16 eingesetzten Betätigungsansatz 55 eine Verschiebung des Schiebeschaltgliedes 16 in gegenläufiger Richtung, wonach die Kontaktarme 58 im Zusammenspiel mit den entsprechenden Kontaktbahnen des Trägers 12 über die Bordelektronik die Lichthupe des Kraftfahrzeuges auslösen. Das Verschwenken des Schalthebels 17 in Richtung des Pfeiles 69 hat nach einer entsprechenden Linearbewegung des Schiebeschaltgliedes 16 das von der Bordelektronik gesteuerte Einschalten des Fernlichtes zur Folge. Das Ausschalten des Fernlichtes erfolgt durch das erneute Verschwenken des Schalthebels 17 in Richtung des Pfeiles 69, da hierdurch das in der Bordelektronik gesetzte Signal zurückgesetzt wird.

Die Funktionsweise des getasteten Wischer-/Wascherschalters 5 ist im wesentlichen äquivalent zu der des Blinkerschalters 4. Erfolgt die Betätigung des Drehschaltgliedes 15 durch das Verschwenken des Schalthebels 17 in Richtung des Pfeiles 70 wird von der Bordelektronik eine erste Stufe der Front-Wischfunktionen aktiviert, die ein Intervall-Wischen ist. Nach dem Loslassen des Schalthebels 17 kehrt dieser in seine Neutralstellung zurück. Das erneute, gegebenenfalls mehrmalige Betätigen des Schalthebels 17 in Richtung des Pfeils 70 bewirkt die Aktivierung einer nächst höheren bzw. beliebig höheren Stufe der Front-Wischfunktionen. Die nächst niedrigere bzw. eine beliebig niedrigere Stufe wird durch ein- bzw. mehrmaliges Betätigen des Schalthebels in Richtung des Pfeiles 71 erreicht. Um die Front-Wischfunktionen auszuschalten, wird der Schalthebel 17 in Richtung des Pfeiles 71 über die Schwelle 66 der Rastkurve 44 bewegt, was ein entsprechendes Rücksetzen der Bordelektronik zur Folge hat. Die Signalgebung zur Bordelektronik erfolgt durch das Zusammenwirken der Kontaktfedern 60 des Drehschaltgliedes 15 mit zugeordneten Kontaktbahnen im Steg 27 des Trägers 12.

Zur Aktivierung der Front-Wisch-/Waschfunktionen bzw. der Heck-Wisch-/Waschfunktionen wird der Schalthebel 17 in Richtung des Pfeiles 72 bzw. in Richtung des Pfeiles 73 verschwenkt, wonach eine jeweils gegenläufige Bewegung des Schiebeschaltgliedes 16 mit entsprechender Signalgebung zur Bordelektronik erfolgt.

Zur Ausführung weiterer Schaltfunktionen, die in den Schalthebel 17 integriert sind, weist das Griffstück 19 an dem in den Fuß 18 eingesetzten Ende freiliegende Kontaktbahnen 74 auf, die über eine Kontaktfedereinheit 75 mit Kontaktbahnen des Steges 27 des Trägers 12 zusammenwirken. Die Kontaktfedereinheit 75 ist zum einen in gegenüberliegenden Langlöchern 76 des Fußes 18 des Schalthebels 17 und zum anderen in dem Drehschaltglied 15 gelagert.

### Bezugszeichenliste

- 1.: Gehäuse
- 2.: Deckel
- 3.: Trägermodul
- 4.: Blinkerschalter
- 5.: Wischer-/Wascherschalter
- 6.: Leiterplatte
- 7.: Übertragungselement
- 8.: Klipsöffnung
- 9.: Klipsarm
- 10.: Aufnahme
- 11.: Befestigungseinrichtung
- 12.: Träger
- 13.: Anschlußkontakt
- 14.: Bohrung
- 15.: Drehschaltglied
- 16.: Schiebeschaltglied
- 17.: Schalthebel
- 18.: Fuß
- 19.: Griffstück
- 20.: Schenkel
- 21.: Rasthülse
- 22.: Rasthülse
- 23.: Rasteinrichtungen
- 24.: Dom
- 25.: Nut
- 26.: Schenkel
- 27.: Steg
- 28.: Zentrieransatz
- 29.: Ausnehmung
- 30.: Lagerbohrung
- 31.: Mikroschalter
- 32.: Schaltkontakt
- 33.: Durchbruch
- 34.: Innenkontur
- 35.: Außenkontur
- 36.: Betätigungseinrichtung
- 37.: Federarm
- 38.: Nocken
- 39.: Schaltnocken
- 40.: Schaltnocken
- 41.: Schaltnocken
- 42.: Schaltnocken
- 43.: Schenkel
- 44.: Stirnseite
- 45.: Rastkurve
- 46.: Schenkel
- 47.: Stirnseite
- 48.: Lagerzapfen
- 49.: Lagerzapfen
- 50.: Durchbruch
- 51.: Achszapfen
- 52.: Bohrung
- 53.: Ende
- 54.: Rastkurve
- 55.: Betätigungsansatz
- 56.: Ausnehmung
- 57.: Steg
- 58.: Kontaktarm
- 59.: Schaltkontakt
- 60.: Kontaktfeder
- 61.: Aussparung
- 62.: Ende
- 63.: Abwinklung
- 64.: Spitze
- 65.: Pfeil
- 66.: Schwelle
- 67.: Pfeil
- 68.: Pfeil
- 69.: Pfeil
- 70.: Pfeil
- 71.: Pfeil
- 72.: Pfeil
- 73.: Pfeil
- 74.: Kontaktbahn
- 75.: Kontaktfedereinheit
- 76.: Langloch

## Patentansprüche

1. Lenkstockschalter eines Kraftfahrzeuges mit einem getasteten Blinkerschalter (4) und einem getasteten Wischer-/Wascherschalter (5) in einem gemeinsamen Gehäuse (1), wobei jeder Schalter (4, 5) einen kreuzgelenkig gelagerten, ein Dreh- (15) sowie Schiebeschaltglied (16) beaufschlagenden Schalthebel (17), einen Träger (12) mit Anschlußkontakten (13) und Rasteinrichtungen (23) zwischen Träger (12) und Schalthebel (17) umfaßt, **dadurch gekennzeichnet, daß** der Schalthebel (17), das Dreh- (15) sowie Schiebeschaltglied (16), der Träger (12) und die Rasteinrichtungen (23) jedes Schalters (4, 5) identisch ausgebildet sind und der Träger (12) im wesentlichen Z-förmig ist, wobei der dem Schalthebel (17) zugewandte Schenkel (20) des Trägers (12) zur Führung des Schiebeschaltgliedes (16) dient, der andere Schenkel (26) des Trägers (12) in das Gehäuse (1) eingesetzt ist und der die Schenkel (20, 26) verbindende Steg (27) das Drehschaltglied (15) lagert.

2. Lenkstockschalter nach Anspruch 1, **dadurch gekennzeichnet, daß** der das Schiebeschaltglied (16) führende Schenkel (20) des Trägers (12) mittig zwei übereinanderliegende, federbelastete Rasthülsen (21, 22) der Rasteinrichtungen (23) haltert, wobei die obere Rasthülse (21) mit einer Rastkurve (54) im Fuß (18) des Schalthebels (17) und die untere Rasthülse (22) mit einer Rastkurve (45) des Drehschaltgliedes (15) zusammenwirkt.

3. Lenkstockschalter nach Anspruch 2, **dadurch gekennzeichnet, daß** jede Rastkurve (54) V-förmig ausgebildet ist.

4. Lenkstockschalter nach einem der Ansprüche 1 bis 3, **dadurch gekennzeichnet, daß** das Drehschaltglied (15) L-förmig ausgeführt ist, wobei in den kurzen Schenkel (46) der Schalthebel (17) schwenkbeweglich eingesetzt und der lange Schenkel (43) in dem Träger (12) gelagert ist.

5. Lenkstockschalter nach Anspruch 4, **dadurch gekennzeichnet, daß** der lange Schenkel (43) des Drehschaltgliedes (15) als Kontaktfedern (60) ausgebildete Schaltkontakte (32) zur Kontaktierung von zugeordneten Kontaktbahnen des Steges (27) des Trägers (12) aufweist.

6. Lenkstockschalter nach den Ansprüchen 4 und 5, **dadurch gekennzeichnet, daß** der lange Schenkel (43) des Drehschaltgliedes (15) mit einer Aussparung (61) vorsehen ist, in die die Kontaktfedern (60) hineinragen.

7. Lenkstockschalter nach Anspruch 6, **dadurch gekennzeichnet, daß** die Kontaktfedern (60) an einer Seite der Aussparung (61) befestigt und an ihren freien Enden (62) jeweils mit einer V-förmigen Abwinklung (63) versehen sind, deren Spitze (64) die zugeordnete Kontaktbahn beaufschlagt.

8. Lenkstockschalter nach Anspruch 4, **dadurch gekennzeichnet, daß** dem langen Schenkel (43) des Drehschaltgliedes (15) eine Betätigungseinrichtung (36) für als Mikroschalter (31) ausgebildete Schaltkontakte (32) zugeordnet ist, die an dem Steg (27) des Trägers (12) angeordnet sind.

9. Lenkstockschalter nach Anspruch 8, **dadurch gekennzeichnet, daß** die Betätigungseinrichtung (36) zwei Federarme (37) zur Beaufschlagung jeweils eines Mikroschalters (31) umfaßt, wobei das freie Ende jedes Federarmes (37) einen Nocken (38) trägt, der mit Schaltnocken (39, 40, 41, 42) des Drehschaltgliedes (15) zusammenwirkt.

10. Lenkstockschalter nach Anspruch 4, **dadurch gekennzeichnet, daß** der kurze Schenkel (46) des Drehschaltgliedes (15) auf der Stirnseite (47) und der gegenüberliegenden Seite jeweils einen Lagerzapfen (48, 49) trägt, wobei der stirnseitige Lagerzapfen (48) in eine entsprechende Lagerbohrung des Gehäuses (1) und der gegenüberliegende Lagerzapfen (49) in eine entsprechende Lagerbohrung (30) des Trägers (12) eingreift.

11. Lenkstockschalter nach einem der Ansprüche 1 oder 2, **dadurch gekennzeichnet, daß** das Schiebeschaltglied (16) eine Ausnehmung (56) für einen Betätigungsansatz (55) des Schalthebels (17) aufweist.

12. Lenkstockschalter nach Anspruch 11, **dadurch gekennzeichnet, daß** die Ausnehmung (56) langlochförmig ausgebildet und einem horizontalen Steg (57) des Schiebeschaltgliedes (16) zugeordnet ist.

13. Lenkstockschalter nach einem der Ansprüche 1 bis 12, d**adurch gekennzeichnet**, daß das Schiebeschaltglied (16) mit senkrecht zu der Ausnehmung (56) angeordneten, als Kontaktarme (58) ausgebildeten Schaltkontakten (59) versehen ist, die mit zugeordneten Kontaktbahnen des entsprechenden Schenkels (20) des Trägers (12) zusammenwirken.

14. Lenkstockschalter nach einem der Ansprüche 1 bis 13, **dadurch gekennzeichnet, daß** der Blinkerschalter (4) und der Wischer-/ Wascherschalter (5) einer gemeinsamen Leiterplatte (6) zugeordnet sind, die mit einem Bordnetz des Kraftfahrzeuges in Verbindung steht.

15. Lenkstockschalter nach Anspruch 14, **dadurch gekennzeichnet, daß** die Leiterplatte (6) mit Bohrungen (14) für die Anschlußkontakte (13) des Blinkerschalters (4) und des Wischer-/ Wascherschalters (5) versehen ist.

## Claims

1. Steering column switch for an automotive vehicle, having a keyed flasher switch (4) and a keyed wiper/washer switch (5) in a common housing (1), each switch (4, 5) including a switching lever (17), which is mounted by means of a universal joint coupling and acts on a rotatable switching member (15) as well as a slidable switching member (16), a carrier (12) with connection contacts (13) and locking devices (23) between carrier (12) and switching lever (17), **characterised in that** the switching lever (17), the rotatable switching member (15) as well as the slidable switching member (16), the carrier (12) and the locking devices (23) of each switch (4, 5) have identical configurations, and the carrier (12) is substantially Z-shaped, the portion (20) of the carrier (12) facing the switching lever (17) serving to guide the slidable switching member (16), the other portion (26) of the carrier (12) being inserted into the housing (1), and the web (27), connecting the portions (20, 26), supporting the rotatable switching member (15).

2. Steering column switch according to claim 1, **characterised in that** the portion (20) of the carrier (12) guiding the slidable switching member (16) centrally supports two spring-loaded locking sleeves (21, 22), situated one above the other, of the locking devices (23), the upper locking sleeve (21) co-operating with a locking profile (54) in the base (18) of the switching lever (17), and the lower locking sleeve (22) co-operating with a locking profile (45) of the rotatable switching member (15).

3. Steering column switch according to claim 2, **characterised in that** each locking profile (54) is V-shaped.

4. Steering column switch according to one of claims 1 to 3, **characterised in that** the rotatable switching member (15) is L-shaped, the switching lever (17) being pivotally inserted into the short portion (46), and the long portion (43) being mounted in the carrier (12).

5. Steering column switch according to claim 4, **characterised in that** the long portion (43) of the rotatable switching member (15) has switching contacts (32), which are in the form of contact springs (60), for contacting associated contact paths of the web (27) of the carrier (12).

6. Steering column switch according to claims 4 and 5, **characterised in that** the long portion (43) of the rotatable switching member (15) is provided with a recess (61), into which the contact springs (60) protrude.

7. Steering column switch according to claim 6, **characterised in that** the contact springs (60) are secured on one side of the recess (61) and are provided at each of their free ends (62) with a V-shaped angular portion (63), the point (64) of which acts on the associated contact path.

8. Steering column switch according to claim 4, **characterised in that** the long portion (43) of the rotatable switching member (15) has associated therewith an actuating device (36) for switching contacts (32), which are in the form of microswitches (31) and are disposed on the web (27) of the carrier (12).

9. Steering column switch according to claim 8, **characterised in that** the actuating device (36) includes two resilient arms (37) for acting on each respective microswitch (31), the free end of each resilient arm (37) bearing a cam (38) which co-operates with switching cams (39, 40, 41, 42) of the rotatable switching member (15).

10. Steering column switch according to claim 4, **characterised in that** the short portion (46) of the rotatable switching member (15) bears a respective journal (48, 49) on the end face (47) and on the oppositely situated side, the end-face journal (48) engaging in a corresponding bearing bore in the housing (1), and the oppositely situated journal (49) engaging in a corresponding bearing bore (30) in the carrier (12).

11. Steering column switch according to one of claims 1 or 2, **characterised in that** the slidable switching member (16) has a recess (56) for an actuating extension (55) of the switching lever (17).

12. Steering column switch according to claim 11, **characterised in that** the recess (56) is in the form of an elongate slot and is associated with a horizontal web (57) of the slidable switching member (16).

13. Steering column switch according to one of claims 1 to 12, **characterised in that** the slidable switching member (16) is provided with switching contacts (59), which are disposed perpendicularly relative to the recess (56) and are in the form of contact arms (58), said switching contacts co-operating with associated contact paths of the corresponding portion (20) of the carrier (12).

14. Steering column switch according to one of claims 1 to 13, **characterised in that** the flasher switch (4) and the wiper/washer switch (5) are associated with one common printed circuit board (6), which communicates with an on-board power supply of the automotive vehicle.

15. Steering column switch according to claim 14, **characterised in that** the printed=circuit board (6) is provided with bores (14) for the connection contacts (13) of the flasher switch (4) and of the wiper/washer switch (5).

## Revendications

1. Commutateur de colonne de direction d'un véhicule automobile comportant un commutateur de clignotant à touche (4) et un commutateur essuie-glace/lave-glace à touche (5) dans un boîtier commun (1), chaque commutateur (4, 5) comprenant un levier de commande (17) monté articulé par un joint de cardan, agissant sur un organe de commutation tournant (15) ainsi qu'un organe de commutation coulissant (16), un support (12) avec des contacts de connexion (13) et des dispositifs d'encliquetage (23) entre le support (12) et le levier de commande (17), **caractérisé en ce que** le levier de commande (17), l'organe de commutation tournant (15) ainsi que l'organe de commutation coulissant (16), le support (12) et les dispositifs d'encliquetage (23) de chaque commutateur (4, 5) sont réalisés à l'identique, et le support (12) a une forme sensiblement en Z, la branche (20) tournée vers le levier de commutation (17) du support (12) servant à guider l'organe de commutation coulissant (16), l'autre branche (26) du support (12) étant insérée dans le boîtier (1) et la traverse (27) reliant les branches (20, 26) supportant l'organe de commutation tournant (15).

2. Commutateur de colonne de direction selon la revendication 1, **caractérisé en ce que** la branche (20), guidant l'organe de commutation coulissant (16) du support (12) maintient au milieu deux douilles d'encliquetage (21, 22) des dispositifs d'encliquetage (23) superposées, sollicitées par ressorts, la douille d'encliquetage supérieure (21) coopérant avec une came d'encliquetage (54) dans le pied (18) du levier de commande (17) et l'autre douille d'encliquetage inférieure (22) avec une came d'encliquetage (45) de l'organe de commutation tournant (15).

3. Commutateur de colonne de direction selon la revendication 2, **caractérisé en ce que** chaque came d'encliquetage (54) a la forme d'un V.

4. Commutateur de colonne de direction selon l'une des revendications 1 à 3, **caractérisé en ce que** l'organe de commutation tournant (15) a la forme d'un L, le levier de commande (17) étant inséré mobile à pivotement dans la branche courte (46) et la branche longue (43) étant montée dans le support (12).

5. Commutateur de colonne de direction selon la revendication 4, **caractérisé en ce que** la branche longue (43) de l'organe de commutation tournant (15) comporte des contacts de commande (32) réalisés en tant que ressorts de contact (60) pour la mise en contact de pistes de contact associées de la traverse (27) du support (12).

6. Commutateur de colonne de direction selon les revendications 4 et 5, **caractérisé en ce que** la branche longue (43) de l'organe de commande tournant (15) est pourvue d'une découpe (61) dans laquelle pénètrent les ressorts de contact (60).

7. Commutateur de colonne de direction selon la revendication 6, **caractérisé en ce que** les ressorts de contact (60) sont fixés sur un côté de la découpe (61) et sont pourvus chacun à leurs extrémités libres (62) d'un coude (63) en forme de V dont la pointe (64) sollicite la piste de contact associée.

8. Commutateur de colonne de direction selon la revendication 4, **caractérisé en ce qu'**à la branche longue (43) de l'organe de commutation tournant (15) est associé un dispositif d'actionnement (36) pour des contacts de commande (32) réalisés en tant que micro-interrupteurs (31), lesquels sont disposés sur la traverse (27) du support (12).

9. Commutateur de colonne de direction selon la revendication 8, **caractérisé en ce que** le dispositif d'actionnement (36) comprend deux bras élastiques (37) pour solliciter chacun un micro-interrupteur (31), l'extrémité libre de chaque bras élastique (37) portant une came (38) qui coopère avec des cames de commande (39, 40, 41, 42) de l'organe de commutation tournant (15).

10. Commutateur de colonne de direction selon la revendication 4, **caractérisé en ce que** la branche courte (46) de l'organe de commutation tournant (15) porte sur le côté frontal (47) et le côté opposé un tourillon (48, 49), le tourillon frontal (48) s'engageant dans un perçage correspondant du boîtier (1) et le tourillon opposé (49) dans un perçage (30) correspondant du support (12).

11. Commutateur de colonne de direction selon l'une des revendications 1 ou 2, **caractérisé en ce que** l'organe de commande coulissant (16) présente un évidement (56) pour un appendice d'actionnement (55) du levier de commande (17).

12. Commutateur de colonne de direction selon la revendication 11, **caractérisé en ce que** l'évidement (56) a la forme d'un trou oblong et est associé à une nervure horizontale (57) de l'organe de commutation coulissant (16).

13. Commutateur de colonne de direction selon l'une des revendications 1 à 12, **caractérisé en ce que** l'organe de commutation coulissant (16) est pourvu de contacts de commande (59) disposés perpendiculairement à l'évidement (56), réalisés comme un bras de contact (58), lesquels coopèrent avec des pistes de contact associées de la branche correspondante (20) du support (12).

14. Commutateur de colonne de direction selon l'une des revendications 1 à 13, **caractérisé en ce que** le commutateur de clignotant (4) et le commutateur d'essuie-glace/lave-glace (5) sont associés à une plaquette de conducteurs (6) commune qui est connectée à un réseau de bord du véhicule automobile.

15. Commutateur de colonne de direction selon la revendication 14, **caractérisé en ce que** la plaquette de conducteurs (6) est pourvue de perçages (14) pour les contacts de connexion (13) du commutateur de clignotant (4) et du commutateur d'essuie-glace/lave-glace (5).
